# EUROPÄISCHE PATENTSCHRIFT

(11) **EP 2 477 877 B1**
(45) Veröffentlichungstag und Bekanntmachung des Hinweises auf die Patenterteilung: **26.06.2013**
(21) Anmeldenummer: 10732873.4
(22) Anmeldetag: 10.07.2010
(51) Int. Cl.: B62D 27/02, B62D 25/04, B62D 25/08

(54) **FAHRZEUGKAROSSERIEAUFBAU IM BEREICH A-SÄULE UND SCHEIBENQUERTRÄGER UND ZUGEORDNETES FERTIGUNGSVERFAHREN**
VEHICLE BODY CONSTRUCTION IN THE REGION OF THE A-PILLAR AND THE WINDOW CROSSMEMBER AND ASSOCIATED PRODUCTION METHOD
STRUCTURE DE CARROSSERIE DE VÉHICULE AUTOMOBILE DANS UNE ZONE DU MONTANT A ET DU SUPPORT TRANSVERSAL DE VITRE, ET PROCÉDÉ DE PRODUCTION CORRESPONDANT

(30) Priorität: 18.09.2009 DE 102009042189
(43) Veröffentlichungstag der Anmeldung: 25.07.2012
(73) Patentinhaber: Audi AG, 85045 Ingolstadt (DE)
(72) Erfinder: WEIGL, Willi, 85095 Zandt (DE); SCHROMM, Martin, 85080 Gaimersheim (DE); OLEFF, Nils, 85049 Ingolstadt (DE); GÜLICH, Stephan, 85139 Wettstetten (DE)
(74) Vertreter: Engelhardt, Harald
(86) Internationale Anmeldenummer: PCT/EP2010/004218
(87) Internationale Veröffentlichungsnummer: WO 2011/032614

(56) Entgegenhaltungen:
- DE-A1- 19 843 824
- GB-A- 2 204 285
- US-A- 4 146 263

## Beschreibung

Die Erfindung betrifft einen Fahrzeugkarosserieaufbau im Bereich A-Säule und Scheibenquerträger nach dem Oberbegriff des Anspruchs 1 sowie ein zugeordnetes Fertigungsverfahren nach dem Oberbegriff des Anspruchs 7.

Bei einem konventionellen, allgemein bekannten Aufbau sind die jeweils gegenüberliegenden A-Säulen aus Stahlblech gebildet und weisen ein etwa vertikal und in Fahrzeuglängsrichtung ausgerichtetes A-Säulen-Innenstahlblech auf. Auch der etwa horizontal liegende Scheibenquerträger ist hier aus Stahlblech gefertigt und jeweils endseitig mit einer Schweißverbindung mit dem zugeordneten A-Säulen-Innenstahlblech verbunden.

Bei modernen Fahrzeugkarosserien kommen zunehmend Werkstoffe aus Leichtmetallen oder Leichtmetalllegierungen, insbesondere Aluminium, zum Einsatz, um durch Gewichtseinsparungen den Kraftstoffverbrauch zu reduzieren. Die Steifigkeiten und Fügetechnologien für Leichtmetallbauteile unterscheiden sich vom bisherigen konventionellen, ausschließlichen Stahlblechbau, so dass dadurch auftretende Probleme mit einem auf die jeweilige Karosseriestelle genau abgestimmten Material-Mix und entsprechender Kombination von Bauteilen sowie mit kostengünstigen Maßnahmen für einen Großserieneinsatz zu lösen sind.

Dazu ist der Einsatz eines Verbund-Karosserieteils bekannt (DE 198 43 824 A1), welches aus einem großflächigen Leichtmetallelement der Karosserieaußenhaut und einem dieses randseitig verstärkenden Stahlelements besteht, die durch Laserstrahlfügen mit einer Dichtnaht verbunden sind. Das Stahlelement kann insbesondere in der Endmontage mit konventioneller Schweißtechnik mit angrenzenden Stahlelementen verbunden werden. Die hier verwendete Technik des Laserstrahlfügens von Leichtmetall mit Stahl zur Herstellung des Verbundkarosserieteils erfordert nur eine einseitige Zugänglichkeit eines Überlappungsstoßes und ermöglicht somit Freiräume hinsichtlich der Zugänglichkeit im Vergleich zu anderen bekannten Fügetechniken, wie beispielsweise Nieten, was eine beidseitige Zugänglichkeit erfordert. Die Laserstrahlfügetechnik ist jedoch aufwendig und kostenintensiv und daher im Großserieneinsatz bei der Herstellung von Fahrzeugkarosserien nur bedingt verwendbar.

Ein Fahrzeugkarosserieaufbau im Bereich eines Scheibenquerträgers ist aus der gattungsgemäßen GB 22 04 285 A bekannt, die eine aus mehreren Schalenteilen hergestellte Hohlträgerstruktur offenbart, die eine durch Pressformen gebildete Scheibenauflage zeigt. Der Scheibenquerträger ist endseitig an gegenüberliegenden A-Säulen angebunden.

Aufgabe der Erfindung ist es, einen gattungsgemäßen konventionellen Fahrzeugkarosserieaufbau im Bereich A-Säule und Scheibenquerträger so weiterzubilden, dass ein gewichtsgünstiger Aufbau mit der erforderlichen Steifigkeit, sowie mit einer für einen Großserieneinsatz geeigneten Fügetechnik erhalten wird.

Diese Aufgabe wird dadurch gelöst, dass der Scheibenquerträger als Verbundbauteil aus einem langgestreckten Aluminiumträgerteil mit jeweils endseitigen, das Aluminiumträgerteil verlängernden, jedoch im Vergleich zur Gesamtträgerlänge kurzen Stahlblech-Adapterelementen hergestellt ist. Dabei sind die Stahlblech-Adapterteile einerseits jeweils mit dem zugeordneten A-Säulen-Innenstahlblech durch eine Schweißverbindung und andererseits mit dem Aluminiumträgerteil durch eine Nietverbindung verbunden. Zum Fügen von Leichtmetallelementen und Stahlelementen haben sich Nietverbindungen als besonders für den Karosseriebau geeignete stabile, kostengünstige und den jeweiligen Gegebenheiten in weiten Grenzen anpassbare Verbindungen erwiesen, die auch im vorliegenden Fall Verwendung finden sollen. Die mit einem Aluminiumträgerteil angestrebte Gewichtsreduzierung gegenüber einem Stahlträgerteil als Scheibenquerträger wäre am größten, wenn der gesamte Scheibenquerträger als Aluminiumträgerteil hergestellt wäre. Eine Anbindung eines solchen Aluminiumträgerteils unmittelbar an eine Stahlblech-A-Säule mit einer Nietverbindung wäre jedoch hier nicht möglich, da dazu eine beiderseitige Zugänglichkeit für ein relativ großvolumiges Nietwerkzeug vorliegen müsste, was durch das Zusammentreffen mehrerer Trägerelemente im Anschlussbereich nicht gegeben ist. Um hier dennoch eine kostengünstige vorteilhafte Nietverbindungstechnik verwenden zu können, sind beiderseits des langgestreckten Aluminiumteils relativ kurze Stahlblech-Adapterelemente mittels Nietverbindungen angeschlossen. Ein solcher Scheibenquerträger kann als Verbundteil kann bereits vorteilhaft als Vormontagemodul vor der Endmontage hergestellt werden. Die Stahlblech-Adapterelemente sollen dabei möglichst kurz und nicht länger gewählt werden als es die Zugänglichkeit für den Nietvorgang fordert, um den Gewichtsvorteil durch das dagegen relativ lange Aluminiumträgerteil möglichst wenig zu reduzieren. Die Stahlblech-Adapterteile können dann insbesondere in der Endmontage einfach über konventionelle Schweißverbindungen mit den A-Säulen-Stahlblechen verbunden werden.

Die Länge eines Adapterelements entspricht dazu etwa 5% bis 10% der Gesamtträgerlänge und entspricht damit etwa der Größe einer zur Herstellung der Nietverbindung herangeführten Matrize eines Stanznietwerkzeugs für eine bevorzugte Stanznietverbindung.

Das A-Säulen-Innenstahlblech, an dem der Scheibenquerträger angeschlossen ist, kann aus einem unteren A-Säulen-Unteninnenstahlblech und einem damit verbunden A-Säulen-Obeninnenstahlblech bestehen, wobei deren Verbindung etwa in der Höhe und etwas unterhalb einer Fensterbrüstung liegt. Dadurch ist der Scheibenquerträger am unteren Bereich des A-Säulen-Obeninnenstahlblechs angebunden.

In einer bevorzugten Ausführungsform ist das Aluminiumträgerteil aus einem oberen Aluminiumblech-Obenträgerteil und einem unteren Aluminiumblech-Untenträgerteil hergestellt. Dabei sind das Aluminiumblech-Obenträgerteil und die beidseitigen Stahlblech-Adapterträgerteile durch wenigstens eine Nietverbindung verbunden, wobei die Stahlblech-Adapterteile jeweils mit wenigstens einem abgekanteten Schweißflansch am zugeordneten A-Säulen-Innenstahlblech anliegen und dort eine Verbindung mittels wenigstens einer Widerstands-Punkt-Schweißung hergestellt ist. Das Aluminiumblech-Untenträgerteil ist dagegen bis unmittelbar an das A-Säulen-Innenstahlblech herangeführt, liegt dort mit wenigstens einem abgekanteten Nietflansch an, wobei dort aufgrund der besseren Zugänglichkeit unmittelbar eine Nietverbindung hergestellt werden kann.

Für den weiteren Aufbau greift von oben ein A-Säulen-Außenstahlblech über das A-Säulen-Innenstahlblech und liegt mit einem Überlappungsstoß auf dem Stahlblech-Adapterteil auf. Im darunter liegenden Aluminiumblech-Untenträgerteil ist unter diesem Überlappungsstoß ein Durchpunktloch zur Einführung einer Elektrode einer Schweißzange vorgesehen, so dass eine Widerstands-Punkt-Schweißung für die Verbindung zwischen dem A-Säulen-Außenstahlblech und dem Stahlblech-Adapterteil hergestellt werden kann.

Die vorstehenden Nietverbindungen werden zweckmäßig durch Stanznieten ausgeführt, wozu regelmäßig die mit Halbhohlnieten erzielbaren Festigkeiten ausreichen. Je nach den Gegebenheiten kann jedoch auch zur Herstellung höherer Festigkeiten und Steifigkeiten Stanznieten mit Vollnieten und gegebenenfalls mit einer zusätzlichen Verklebung am zugeordneten Überlappungsstoß vorgesehen werden.

Hinsichtlich des Fertigungsverfahrens wird die Aufgabe der Erfindung dadurch gelöst, dass der Scheibenquerträger als Verbundbauteil aus dem Aluminiumträgerteil und mit den Nietverbindungen angeschlossenen Stahlblech-Adapterteilen hergestellt wird. In der Endmontage wird dann der Scheibenquerträger mit den Stahlblech-Adapterteilen durch Widerstands-Punkt-Schweißen jeweils am A-Säulen-Innenstahlblech und gegebenenfalls mit einem Aluminiumblech-Untenträgerteil direkt durch Nietverbindungen am jeweiligen A-Säulen-Innenstahlblech angeschlossen. Anschließend wird dann ein A-Säulen-Außenstahlblech gegebenenfalls über ein Durchpunktloch am Aluminiumblech-Untenträgerteil mittels einer Widerstands-Punkt-Schweißung am jeweiligen Stahlblech-Adapterteil angeschlossen.

Mit einem solchen Verfahrensablauf sind die erforderlichen Verbindungen der einzelnen Bauteile einfach und kostengünstig herstellbar.

Anhand einer Zeichnung wird die Erfindung weiter erläutert.

Es zeigen:
- Fig. 1: eine perspektivische, schematische Draufsicht auf die linke Innenseite eines Fahrzeugkarosserieaufbaus im Bereich. A-Säule und Scheibenquerträger, und
- Fig. 2: einen schematischen Schnitt entlang der Linie A-A aus Fig. 1.

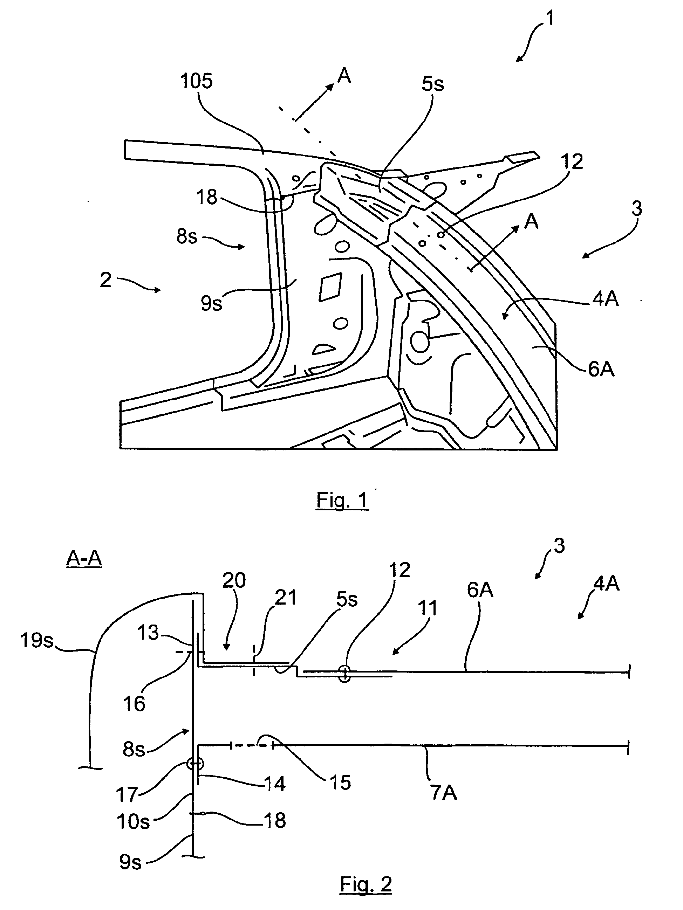

In Fig. 1 ist schematisch von schräg oben her ein Blick auf einen Fahrzeugkarosserieaufbau im Innenbereich der linken A-Säule 2 und eines Scheibenquerträgers 3 (teilweise dargestellt) gezeigt. Der Scheibenquerträger 3 ist als Verbundbauteil aus einem langgestreckten Aluminiumträgerteil 4A und jeweils endseitig angeschlossenen Stahlblech-Adapterteilen 5S hergestellt (der Bezugszeichenindex A weist auf ein Aluminiumteil und der Bezugszeichenindex S auf ein Stahlteil hin).

Aus dem schematischen Schnitt entlang der Linie A-A in Fig. 2 ist in einer weiteren Konkretisierung zu entnehmen, dass das Aluminiumträgerteil 4A aus einem Aluminiumblech-Obenträgerteil 6A und einem Aluminiumblech-Untenträgerteil 7A besteht. Das Stahlblech-Adapterteil 5S ist hier jeweils am Aluminiumblech-Obenträgerteil 6A zu dessen Verlängerung angeschlossen.

Die A-Säule 2 besteht aus einem A-Säulen-Innenstahlblech 8S, welches wiederum aus einem unteren A-Säulen-Unteninnenstahlblech 9S und einem oberen A-Säulen-Obeninnenstahlblech 10S gebildet ist, wobei deren Verbindung 18 etwas unterhalb einer Fensterbrüstung liegt. Der Scheibenquerträger 3 ist am A-Säulen-Obeninnenstahlblech 10S angeschlossen.

Wie aus Fig. 2 ersichtlich ist das Aluminiumblech-Obenträgerteil 6A mit dem Stahlblech-Adapterteil 5S endseitig verlängert und an einem Überlappungsstoß 11 mit einer (schematisch dargestellten) Halbhohlnietverbindung 12 verbunden. Zudem weist das Stahlblech-Adapterteil 5S einen endseitig aufgekanteten Schweißflansch 13 auf. Das Aluminiumblech-Untenträgerteil 7A entspricht in seiner Länge dem Aluminiumblech-Obenträgerteil 6A mit den jeweils endseitig angeschlossenen Stahlblech-Adapterteilen 5S und weist endseitig jeweils einen abgekanteten Nietflansch 14 auf. Zudem liegt unterhalb des Stahlblech-Adapterteils 5S jeweils ein Durchpunktloch 15. Der Scheibenquerträger 3 kann als Vormontagemodul hergestellt werden.

Zur Endmontage wird dann der Scheibenquerträger 3 zu beiden Seiten an das jeweilige A-Säulen-Obeninnenstahlblech 10S mit dem Schweißflansch 13 und dem Nietflansch 14 angelegt und am Schweißflansch 13 mit einer Schweißverbindung 16 und am Nietflansch 14 durch Stanznieten mit Halbhohlnieten mit einer Nietverbindung 17 gefügt.

Anschließend wird ein das A-Säulen-Innenstahlblech 8S von oben her übergreifendes A-Säulen-Außenstahlblech 19S angesetzt, welches von oben mit einem Überlappungsstoß 20 auf dem Stahlblech-Adapterteil 5S oberhalb des Durchpunktlochs 15 aufliegt. Damit wird eine Schweißverbindung 21 zwischen dem A-Säulen-Außenstahlblech 19S und dem Stahlblech-Adapterteil 5S mittels einer Widerstands-Punkt-Schweißung hergestellt.

**Bezugiszeichenliste**

| | |
|---|---|
| 1 | Fahrzeugkarosserieaufbau |
| 2 | A-Säule |
| 3 | Scheibenquerträger |
| 4A | Aluminiumträgerteil |
| 5S | Stahlblech-Adapterteile |
| 6A | Aluminiumblech-Obenträgerteil |
| 7A | Aluminiumblech-Untenträgerteil |
| 8S | A-Säulen-Innenstahlblech |
| 9S | A-Säulen-Unteninnenstahlblech |
| 10S | A-Säulen-Obeninnenstahlblech |
| 11 | Überlappungsstoß |
| 12 | Halbhohl-Nietverbindung |
| 13 | Schweißflansch |
| 14 | Nietflansch |
| 15 | Durchpunktloch |
| 16 | Schweißverbindung |
| 17 | Nietverbindung |
| 18 | Verbindung (an A-Säule) |
| 19S | A-Säulen-Außenstahlblech |
| 20 | Überlappungsstoß |
| 21 | Schweißverbindung |

## Patentansprüche

1. Fahrzeugkarosserieaufbau im Bereich A-Säule (2) und Scheibenquerträger (3),
mit zu beiden Seiten der Karosserie jeweils einer A-Säule (2), welche in ihrem Säulenaufbau ein etwa vertikal und in Fahrzeuglängsrichtung ausgerichtetes A-Säulen-Innenstahlblech (8S) aufweist,
mit einem etwa horizontal liegenden Scheibenquerträger (3) der jeweils endseitig mit einer Schweißverbindung mit dem zugeordneten A-Säulen-Innenstahlblech (8S) verbunden ist,
**dadurch gekennzeichnet,**
**dass** der Scheibenquerträger (3) als Verbundbauteil aus einem langgestreckten Aluminiumträgerteil (4A) mit jeweils endseitigen, das Aluminiumträgerteil (4A) verlängernden, jedoch im Vergleich zur Gesamtträgerlänge kurzen Stahlblech-Adapterteilen (5S) hergestellt ist, und
**dass** die Stahlblech-Adapterteile (5S) einerseits jeweils mit dem zugeordneten A-Säulen-Innenstahlblech (8S) durch eine Schweißverbindung (16) und andererseits jeweils mit dem Aluminiumträgerteil (4A) durch eine Nietverbindung (17) verbunden sind.

2. Fahrzeugkarosserieaufbau nach Anspruch 1, **dadurch gekennzeichnet, dass** die Länge eines Stahlblech-Adapterteils etwa 5% bis 10% der Gesamtträgerlänge entspricht und damit etwa der erforderlichen Größe einer zur Herstellung der Nietverbindung (17) herangeführten Matrize eines Stanznietwerkzeugs entspricht.

3. Fahrzeugkarosserieaufbau nach Anspruch 1 oder Anspruch 2, **dadurch gekennzeichnet,**
**dass** das A-Säulen-Innenstahlblech (8S) aus einem A-Säulen-Unteninnenstahlblech (9S) und einem damit verbundenen A-Säulen-Obeninnenstahlblech (10S) besteht, wobei die Verbindung (18) etwa in der Höhe und unterhalb einer Fensterbrüstung liegt, und
**dass** der Scheibenquerträger (3) am unteren Bereich des A-Säulen-Obeninnenstahlblechs (10S) angebunden ist.

4. Fahrzeugkarosserieaufbau nach einem der Ansprüche 1 bis 3, **dadurch gekennzeichnet,**
**dass** das Aluminiumträgerteil aus einem oberen Aluminiumblech-Obenträgerteil und einem unteren Aluminiumblech-Untenträgerteil besteht,
**dass** das Aluminiumblech-Obenträgerteil (6A) und das Stahlblech-Adapterteil (5S) an einem Überlappungsstoß (11) mit wenigstens einer Nietverbindung (12) verbunden sind,
**dass** das Stahlblech-Adapterteil (5S) wenigstens einen am A-Säulen-Innenstahlblech (8S) anliegenden, abgekanteten Schweißflansch (13) aufweist und dort mittels wenigstens einer Widerstands-Punkt-Schweißung (16) eine Verbindung hergestellt ist, und
**dass** das Aluminiumblech-Untenträgerteil (7A) bis an das A-Säulen-Innenstahlblech (8S) herangeführt ist, dort mit wenigstens einem abgekanteten Nietflansch (14) anliegt und dort wenigstens eine Nietverbindung (17) hergestellt ist.

5. Fahrzeugkarosserieaufbau nach Anspruch 4, **dadurch gekennzeichnet, dass** ein A-Säulen-Außenstahlblech (19S) über das A-Säulen-Innenstahlblech (8S) greift und von oben mit einem Überlappungsstoß (20) auf dem Stahlblech-Adapterteil (5S) aufliegt,
dass darunter im Aluminiumblech-Untenträgerteil (7A) ein Durchpunktloch (15) zur Einführung einer Elektrode einer Schweißzunge zur Herstellung einer Widerstands-Punkt-Schweißung für die Verbindung zwischen dem A-SäulenAußenstahlblechs (19S) und dem Stahlblech-Adapterteil (5S) vorgesehen ist.

6. Fahrzeugkarosserieaufbau nach einem der Ansprüche 1 bis 5, **dadurch gekennzeichnet, dass** die Nietverbindungen (12, 17) durch Stanznieten, vorzugsweise mit Halbhohlnieten, gegebenenfalls auch mit Vollnieten und einer zusätzlichen Verklebung am zugeordneten Überlappungsstoß (11, 14) hergestellt sind.

7. Fertigungsverfahren eines Fahrzeugkarosserieaufbaus im Bereich A-Säule (2) und Scheibenquerträger (3) nach einem der vorstehenden Ansprüche, **dadurch gekennzeichnet,**
**dass** der Scheibenquerträger (3) als Verbundbauteil aus dem Aluminiumträgerteil (4A) und mit Nietverbindungen (12) angeschlossenen Stahlblech-Adapterteilen (5S) als Vormontagemodul hergestellt wird, und
**dass** in der Endmontage der Scheibenquerträger (3) mit den Stahlblech-Adapterteilen (5S) durch Widerstands-Punkt-Schweißen (16) jeweils am A-Säulen-Innenstahlblech (8S) und gegebenenfalls mit einem Aluminiumblech-Untenträgerteil (7A) direkt durch eine Nietverbindung (17) am jeweiligen A-Säulen-Innenstahlblech (8S) angeschlossen wird, und
**dass** gegebenenfalls darauffolgend jeweils ein A-Säulen-Außenstahlblech (19S) über ein Durchpunktloch (15) mittels einer Widerstands-Punkt-Schweißung (21) an das jeweilige Stahlblech-Adapterteil (5S) angeschlossen wird.

## Claims

1. Vehicle body construction in the A-pillar (2) and windscreen cross member (3) region, comprising an A-pillar (2) on either side of the body, the construction of which A-pillar comprises an A-pillar inner steel plate (8S) which is oriented approximately vertically and in the longitudinal direction of the vehicle, comprising a substantially horizontal windscreen cross member (3), either end of which is connected to the associated A-pillar inner steel plate (8S) by a welded joint, **characterised in that** the windscreen cross member (3) is produced as a composite component made from an elongate aluminium beam part (4A) comprising steel plate adapter parts (5S) at either end which extend the aluminium beam part (4A) but are shorter than the total length of the beam, and **in that** each steel plate adapter part (5S) is connected on one side to the associated A-pillar inner steel plate (8S) by a welded joint (16) and on the other side to the aluminium beam part (4A) by a riveted joint (17).

2. Vehicle body construction according to claim 1, **characterised in that** the length of a steel plate adapter part is approximately 5 % to 10 % of the total length of the beam and thus is approximately the required size of a die of a riveting tool used for producing the riveted joint (17).

3. Vehicle body construction according to either claim 1 or claim 2, **characterised in that** the A-pillar inner steel plate (8S) consists of an A-pillar bottom inner steel plate (9S) and an A-pillar top inner steel plate (10S) connected thereto, the connection (18) being located approximately at the height of and below a window parapet, and **in that** the windscreen cross member (3) is connected to the lower region of the A-pillar top inner steel plate (10S).

4. Vehicle body construction according to any of claims 1 to 3, **characterised in that** the aluminium beam part consists of an upper aluminium plate top beam part and a lower aluminium plate bottom beam part, **in that** the aluminium plate top beam part (6A) and the steel plate adapter part (5S) are connected at a lap joint (11) by means of at least one riveted joint (12), **in that** the steel plate adapter part (5S) has at least one bent welding flange (13) which abuts the A-pillar inner steel plate (8S) and a connection is produced here by means of at least one joint (16) produced by resistance spot welding, and **in that** the aluminium plate bottom beam part (7A) is brought up to the A-pillar inner steel plate (8S), abuts said A-pillar inner steel plate with at least one bent rivet flange (14) and at least one riveted joint (17) is produced here.

5. Vehicle body construction according to claim 4, **characterised in that** an A-pillar outer steel plate (19S) engages over the A-pillar inner steel plate (8S) and rests on the steel plate adapter part (5S) from above to form a lap joint (20), **in that** the aluminium plate bottom beam part (7A) is provided with a through hole (15) underneath said lap joint for inserting an electrode of welding tongs for connecting the A-pillar outer steel plate (19S) to the steel plate adapter part (5S) by resistance spot welding.

6. Vehicle body construction according to any of claims 1 to 5, **characterised in that** the riveted joints (12, 17) are produced by punch rivets, preferably by semi-tubular rivets, optionally also by solid rivets and additional bonding at the associated lap joint (11, 14).

7. Method for manufacturing a vehicle body construction in the A-pillar (2) and windscreen cross member (3) region according to any of the preceding claims, **characterised in that**, as a pre-assembly module, the windscreen cross member (3) is produced as a composite component made from the aluminium beam part (4A) and comprising steel plate adapter parts (5S) which are connected using riveted joints (12), and **in that**, during final assembly, the windscreen cross member (3) is connected to the steel plate adapter parts (5S) at each A-pillar inner steel plate (8S) by resistance spot welding (16) and is optionally connected to an aluminium plate bottom beam part (7A) directly by a riveted joint (17) at each A-pillar inner steel plate (8S), and **in that** each A-pillar outer steel plate (19S) is then optionally connected to each steel plate adapter part (5S) by resistance spot welding (21) via a through hole (15).

## Revendications

1. Structure de carrosserie de véhicule automobile dans la zone de la colonne A (2) et du support transversal de vitre (3), comprenant :
avec, sur les deux côtés de la carrosserie, respectivement, une colonne A (2), qui présente dans sa structure de colonne une tôle d'acier interne (8S) de colonne A orientée plus ou moins verticalement et dans la direction longitudinale du véhicule,
avec un support transversal de vitre (3) qui s'étend à peu près horizontalement et qui est relié respectivement côté extrémité par un joint soudé à la tôle d'acier interne (8S) correspondante de la colonne A,
**caractérisée en ce que**
le support transversal de vitre (3) est fabriqué sous la forme d'une pièce composite formée d'une pièce de support d'aluminium allongée (4A) avec des pièces d'adaptation (5S) en tôle d'acier respectivement côté extrémité prolongeant la pièce de support d'aluminium (4A), mais courtes en comparaison de la longueur de support totale, et
les pièces d'adaptation (5S) en tôle d'acier sont reliées, d'une part, respectivement, à la tôle d'acier interne correspondante (8S) de la colonne A par un joint soudé (16) et, d'autre part, respectivement à la pièce de support d'aluminium (4A) par un joint riveté (17).

2. Structure de carrosserie de véhicule automobile selon la revendication 1, **caractérisée en ce que** la longueur d'une pièce d'adaptation en tôle d'acier correspond à environ 5 % à 10 % de la longueur totale du support et correspond donc plus ou moins à la grandeur requise d'une matrice d'un outil de poinçonnage-rivetage appliquée pour élaborer un joint riveté (17).

3. Structure de carrosserie de véhicule automobile selon la revendication 1 ou la revendication 2, **caractérisée en ce que**
la tôle d'acier interne (8S) de la colonne A est constituée d'une tôle d'acier interne inférieure (9S) et d'une tôle d'acier interne supérieure (10S), dans laquelle le joint (18) se situe approximativement à la hauteur et en dessous d'un appui de fenêtre et
le support transversal de vitre (3) est fixé sur la zone inférieure de la tôle d'acier interne supérieure (10S) de la colonne A.

4. Structure de carrosserie de véhicule automobile selon l'une quelconque des revendications 1 à 3, **caractérisée en ce que**
la pièce de support d'aluminium est constituée d'une pièce de support supérieure en tôle d'aluminium et d'une pièce de support inférieure d'aluminium,
la pièce de support supérieure (6A) en tôle d'aluminium et la pièce d'adaptation (5S) en tôle d'acier sont raccordées sur un joint à recouvrement (11) avec au moins un joint riveté (12),
la pièce d'adaptation (5S) en tôle d'acier présente au moins une bride de soudage (13) chanfreinée, s'appliquant sur la tôle d'acier interne (8S) de la colonne A et il y est formé un joint au moyen d'au moins une soudure par points (16), et
la pièce de support inférieure (7A) en tôle d'aluminium est appliquée jusque sur la tôle d'acier interne (8S) de la colonne A, s'y applique par au moins une bride de rivetage (14) chanfreinée et au moins un joint riveté (17) y est formé.

5. Structure de carrosserie de véhicule automobile selon la revendication 4, **caractérisée en ce qu'**une tôle d'acier externe (19S) de la colonne A s'engage sur la tôle d'acier interne (8S) de la colonne A et s'applique par le dessus avec un joint à recouvrement (20) sur la pièce d'adaptation (5S) en tôle d'acier, et
il est prévu en dessous dans la pièce de support interne (7A) en tôle d'aluminium un trou ponctuel traversant (15) pour insérer une électrode d'une languette de soudage afin d'effectuer une soudure par points pour former le joint entre la tôle d'acier externe (19S) de la colonne A et la pièce d'adaptation (5S) en tôle d'acier.

6. Structure de carrosserie de véhicule automobile selon l'une quelconque des revendications 1 à 5, **caractérisée en ce que** les joints rivetés (12, 17) sont élaborés par poinçonnage-rivetage, de préférence avec des rivets semi-cylindriques, éventuellement aussi avec des rivets pleins, et un collage supplémentaire sur le joint à recouvrement correspondant (11,14).

7. Procédé de fabrication d'une structure de carrosserie de véhicule automobile dans la zone de la colonne A (2) et du support transversal de vitre (3) selon l'une quelconque des revendications précédentes, **caractérisé en ce que** :
le support transversal de vitre (3) est fabriqué sous la forme d'une pièce composite constituée de la pièce de support en aluminium (4A) et de pièces d'adaptation (5S) en tôle d'acier raccordées avec des joints rivetés (12) comme module de pré-montage,
lors du montage final, le support transversal de vitre (3) est raccordé aux pièces d'adaptation (5S) en tôle d'acier par soudage par points (16) respectivement sur la tôle d'acier interne (8S) de la colonne A et, éventuellement, à une pièce de support inférieure (7A) en tôle d'aluminium directement par un joint riveté (17) sur la tôle d'acier interne respective (8S) de la colonne A, et
éventuellement, à la suite, respectivement une tôle d'acier externe (19S) de la colonne A est raccordée via un trou ponctuel traversant (15) au moyen d'un soudage par points (21) sur la pièce d'adaptation respective (5S) en tôle d'acier.
